# EUROPEAN PATENT SPECIFICATION

(11) **EP 3 660 288 B1**
(45) Date of publication and mention of the grant of the patent: **09.06.2021**
(21) Application number: 17919125.9
(22) Date of filing: 26.07.2017
(51) Int. Cl.: F01N 3/20, F01N 9/00

(54) **INJECTION AMOUNT CONTROL METHOD AND DEVICE FOR SCR UREA INJECTION SYSTEM IN ENGINE**
EINSPRITZMENGENSTEUERVERFAHREN UND VORRICHTUNG FÜR SCR-HARNSTOFF-HARNSTOFFEINSPRITZSYSTEM IN EINEM MOTOR
PROCÉDÉ ET DISPOSITIF DE COMMANDE DE QUANTITÉ D'INJECTION POUR SYSTÈME D'INJECTION D'URÉE DE SCR DANS UN MOTEUR

(43) Date of publication of application: 03.06.2020
(73) Proprietor: Robert Bosch GmbH, 70442 Stuttgart (DE)
(72) Inventor: LIANG, Kanglei, Shanghai 200335 (CN)
(86) International application number: PCT/CN2017/094454
(87) International publication number: WO 2019/019046

(56) References cited:
- EP-A1- 2 025 388
- EP-A1- 2 749 745
- WO-A1-2017/005348
- CN-A- 106 837 480
- CN-A- 106 837 488
- DE-B3-102011 008 380
- US-A1- 2004 098 968
- US-A1- 2014 360 165

## Description

### Technical field

The present application generally relates to the field of engines, and more particularly to a method and device for controlling an aqueous urea solution injection amount of a selective catalytic reduction (SCR) urea injection system in an engine.

### Background art

Selective Catalytic Reduction (SCR) is a treatment process for NOx in motor vehicle exhaust gas emissions, wherein a reducing agent, ammonia or urea, is injected to reduce NOx in exhaust gas to N₂ and H₂O under the action of a catalyst (see e.g. EP2025388 A1). This technology has also been widely used in exhaust gas post-treatment; by optimizing fuel injection and combustion processes, the production of particles PM is controlled within the engine as far as possible, and nitrogen oxides formed in oxygen-rich conditions are subsequently treated outside the engine, i.e. vehicle urea is used (vehicle urea decomposes to produce ammonia at a certain temperature) to subject nitrogen oxides (NOx) to SCR, thereby achieving the objectives of saving energy and reducing emissions.

The basic operating principles of an SCR system are as follows: exhaust gas exits a turbine and then enters an exhaust gas mixing pipe, on which is mounted a urea metering injection device which injects an aqueous urea solution; the urea undergoes hydrolysis and pyrolysis reactions at a high temperature to produce NH₃, which is used to reduce NOₓ on a surface of the catalyst of the SCR system; N₂ is discharged, and surplus NH₃ is also reduced to N₂, preventing leakage. The complex physical and chemical reactions taking place in the SCR system generally include: injection, atomization and evaporation of the aqueous urea solution, hydrolysis and pyrolysis gas-phase chemical reactions of urea, and catalytic surface chemical reactions of NOₓ with NH₃ on the catalyst surface.

In general, the amount of urea liquid aqueous solution used in an SCR system is very large. Generally, 5 L of liquid urea aqueous solution is consumed at the same time as 100 L of fuel is consumed. When the urea injection amount is large, spray will pass through an exhaust gas stream, strike an exhaust pipe wall surface and accumulate as a liquid film. Within the range of a normal operation exhaust temperature region, 200°C - 300°C, of an engine, the accumulated urea solution reacts very easily to produce water-insoluble solid matter, and the phenomenon of urea crystallization occurs.

### Content of the invention

The brief introduction below is provided for the purpose of introducing some selected concepts in simple terms; these concepts will be described further in the subsequent detailed explanation. The brief introduction is not intended to highlight key features or necessary features of the subject matter for which protection is claimed, and is not intended to restrict the scope of the subject matter for which protection is claimed.

According to one aspect of the present application, a method for controlling an aqueous urea solution injection amount of an SCR urea injection system in an engine is provided, the method comprising: using an ammonia loading amount model to calculate a current ammonia loading amount in an SCR reactor, on the basis of an aqueous urea solution amount injected to the SCR reactor and an ammonia amount consumed by the SCR reactor; obtaining a first urea injection amount, on the basis of a target ammonia loading amount and the calculated current ammonia loading amount; using an SCR efficiency model to calculate a second urea injection amount, on the basis of a catalyst temperature, an exhaust gas mass flow rate and an aging coefficient in the SCR reactor, a nitrogen-oxygen compound concentration upstream of the SCR reactor, and the calculated current ammonia loading amount; combining the first urea injection amount and the second urea injection amount to obtain a combined urea injection amount; and obtaining a target injection amount of aqueous urea solution injected to the SCR reactor on the basis of the combined urea injection amount and a urea injection amount limit value.

According to another aspect of the present application, a device for controlling an aqueous urea solution injection amount of an SCR urea injection system in an engine is provided, the device comprising: an ammonia loading amount calculating unit, for using an ammonia loading amount model to calculate a current ammonia loading amount in an SCR reactor, on the basis of an aqueous urea solution amount injected to the SCR reactor and an ammonia amount consumed by the SCR reactor; a first urea injection amount obtaining unit, for obtaining a first urea injection amount, on the basis of a target ammonia loading amount and the calculated current ammonia loading amount; a second urea injection amount obtaining unit, for using an SCR efficiency model to calculate a second urea injection amount, on the basis of a catalyst temperature, an exhaust gas mass flow rate and an aging coefficient in the SCR reactor, a nitrogen-oxygen compound concentration upstream of the SCR reactor, and the calculated current ammonia loading amount; a combining unit, for combining the first urea injection amount and the second urea injection amount, to obtain a combined urea injection amount; and a target injection amount obtaining unit, for obtaining a target injection amount of aqueous urea solution injected to the SCR reactor, on the basis of the combined urea injection amount and a urea injection amount limit value.

According to another aspect of the present application, a calculation system is provided, comprising: one or more processors; and a memory, storing a calculation system executable instruction which, when executed, causes the one or more processors to the method as described above for controlling an aqueous urea solution injection amount of an SCR urea injection system in an engine.

According to another aspect of the present application, a non-transitory machine-readable storage medium is provided, which medium stores an executable instruction which, when executed, causes the machine to execute the method as described above for controlling an aqueous urea solution injection amount of an SCR urea injection system in an engine.

Using the method according to the present application for controlling an aqueous urea solution injection amount of an SCR urea injection system in an engine, by obtaining the first and second urea injection amounts on the basis of an ammonia loading model and the SCR efficiency model, and obtaining the target urea injection amount of the SCR reactor on the basis of the combined first and second urea injection amounts and the urea injection amount limit value corresponding to urea crystallization, the amount of urea injected into the SCR reactor can be precisely controlled, thereby preventing the occurrence of urea crystallization in an engine exhaust pipeline and the SCR reactor.

### Description of the accompanying drawings

Reference to the accompanying drawings below will enable further understanding of the substance and advantages of the content disclosed herein. In the drawings, similar components or features may have identical reference labels.
Fig. 1 shows a flow chart of one example of a method for controlling an aqueous urea solution injection amount of an SCR urea injection system in an engine according to an embodiment of the present application;
fig. 2 shows a block diagram of one example of a device for controlling an aqueous urea solution injection amount of an SCR urea injection system in an engine according to an embodiment of the present application;
fig. 3 shows a flow chart of another example of a method for controlling an aqueous urea solution injection amount of an SCR urea injection system in an engine according to an embodiment of the present application;
fig. 4 shows a block diagram of another example of a device for controlling an aqueous urea solution injection amount of an SCR urea injection system in an engine according to an embodiment of the present application;
fig. 5 shows a block diagram of a calculation system for controlling an aqueous urea solution injection amount of an SCR urea injection system in an engine according to an embodiment of the present application;
fig. 6 shows a urea injection system having a device for controlling an aqueous urea solution injection amount of an SCR urea injection system in an engine according to an embodiment of the present application; and
fig. 7 shows an SCR system having a device for controlling an aqueous urea solution injection amount of an SCR urea injection system in an engine according to an embodiment of the present application.

### Particular embodiments

The subject matter described herein is now discussed with reference to demonstrative embodiments. It should be understood that these embodiments are discussed solely in order to enable those skilled in the art to better understand and thereby implement the subject matter described herein, and do not restrict the scope of protection expounded in the Claims, suitability or examples. The function and arrangement of elements discussed may be changed without departing from the scope of protection of the content of this disclosure. Various processes or components may be omitted, replaced or added as required in the various examples. For example, the method described may be executed in a sequence different from the sequence described, and various steps may be added, omitted or combined. Furthermore, features described relative to some examples may also be combined in other examples.

As used herein, the term "comprises" and variants thereof signify an open term, with the meaning being "comprising but not limited to". The term "on the basis of' means "at least partially on the basis of'. The terms "one embodiment" and "an embodiment" mean "at least one embodiment". The term "another embodiment" means "at least one other embodiment". The terms "first", "second", etc. may denote different or identical objects. Other definitions, explicit or implicit, may be included below. Unless clearly specified in the context, the definition of one term is consistent throughout the Description.

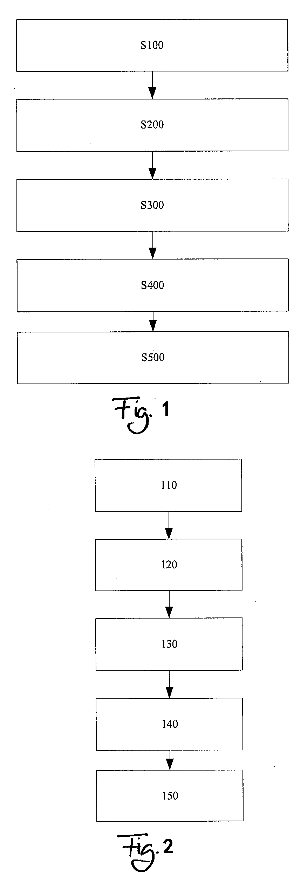

Fig. 1 shows a flow chart of one example of a method for controlling an injection amount of an SCR urea injection system in an engine according to an embodiment of the present application. The method may be executed by a device for controlling an injection amount of an SCR urea injection system in an engine (abbreviated as a control device hereinbelow).

As shown in fig. 1, in box S100, the control device uses an ammonia loading amount model to calculate a current ammonia loading amount in an SCR reactor on the basis of an aqueous urea solution amount injected to the SCR reactor and an ammonia amount consumed by the SCR reactor. Here, the injected aqueous urea solution amount is an aqueous urea solution amount injected to the SCR reactor through a urea nozzle, and may be detected by means of a sensor disposed at the urea nozzle and transmitted to the control device. For example, the injected aqueous urea solution amount may be calculated using an electronically controlled urea nozzle energization time, an injection pressure, a nozzle characteristic, and a concentration of urea in a standard urea solution. After obtaining the aqueous urea solution amount as described above, a pyrolysis reaction caused by an exhaust gas temperature is used to subject the injected aqueous urea solution to pyrolysis, thereby obtaining an injected ammonia amount. The ammonia amount is calculated on the basis of the injected aqueous urea solution amount and a parameter such as the chemical coefficient of urea and ammonia. The ammonia amount consumed by the SCR reactor is an ammonia amount consumed by the SCR reactor in a catalytic reduction reaction, and may be calculated using nitrogen-oxygen compound concentrations detected by NOx sensors disposed in front of and behind the SCR reactor and the chemical coefficient of nitrogen oxides and ammonia in the SCR reduction reaction, and transmitted to the control device. The sensor may be realized using a gas sensor of any type that is well known in the art, e.g. an NOx sensor manufactured by BOSCH. The units of the ammonia amount are generally equivalents, e.g. mg/s. The ammonia loading amount model may be a preset model; an input thereof generally comprises the injected ammonia amount and the consumed ammonia amount, and an output thereof is the current ammonia loading amount in the SCR reactor. In general, the ammonia loading amount model may be constructed through multiple experiments.

After calculating the current ammonia loading amount in the SCR reactor as described above, in box S200, a first urea injection amount is obtained on the basis of a target ammonia loading amount and the calculated current ammonia loading amount. Here, the target ammonia loading amount may be preset, and may be an experimental value or an empirical value. The target ammonia loading amount is determined by a catalyst temperature and an exhaust gas mass flow rate. In one example of the present application, the step of obtaining a first urea injection amount, on the basis of a target ammonia loading amount and the calculated current ammonia loading amount may comprise: calculating the difference between the target ammonia loading amount and the current ammonia loading amount; and obtaining the first urea injection amount on the basis of the calculated difference. The first urea injection amount is a urea injection amount corresponding to ammonia loading. In other examples of the present application, the step of obtaining a first urea injection amount on the basis of a target ammonia loading amount threshold value and the calculated current ammonia loading amount may also be realized in other suitable ways.

Next, in box S300, the control device uses an SCR efficiency model to calculate a second urea injection amount on the basis of a catalyst temperature, an exhaust gas mass flow rate and an aging coefficient in the SCR reactor, a nitrogen-oxygen compound concentration upstream of the SCR reactor, and the calculated current ammonia loading amount. Similarly, the catalyst temperature and exhaust gas mass flow rate in the SCR reactor and the nitrogen-oxygen compound concentration may be detected by means of a temperature sensor and flow rate sensor disposed in the SCR reactor, and a nitrogen-oxygen compound concentration sensor located upstream of the SCR reactor, and transmitted to the control device. The term "aging coefficient" herein refers to the ratio of the maximum conversion efficiency of the SCR reactor after the vehicle has travelled a certain mileage to the maximum conversion efficiency thereof when the mileage is 0 km It is a function of the total mileage travelled by the vehicle; in general, the greater the mileage travelled, the smaller the coefficient, and the range thereof is 0 - 1. The aging coefficient may be preset, or set in real time by means of environmental parameters. Here, similar to the ammonia loading amount model, the SCR efficiency model may be a preset model; an input thereof generally comprises the catalyst temperature, the exhaust gas mass flow rate and the aging coefficient in the SCR reactor, the nitrogen-oxygen compound concentration upstream of the SCR reactor, and the calculated current ammonia loading amount, and an output thereof is a urea injection amount corresponding to SCR efficiency. Generally, the SCR efficiency model may be constructed through multiple experiments.

Then, in box S400, the first urea injection amount and the second urea injection amount are combined, to obtain a combined urea injection amount. Here, the aim of combining the first urea injection amount and the second urea injection amount is to comprehensively consider two factors, namely ammonia loading and SCR efficiency, and thereby make an obtained urea injection amount more precise. In one example of the present application, the step of combining the first urea injection amount and the second urea injection amount, to obtain a combined urea injection amount, may comprise: summing the first urea injection amount and the second urea injection amount. In other examples of the present invention, combination can also be carried out in other suitable ways, e.g. setting weighting factors for the first urea injection amount and the second urea injection amount respectively, and then performing weighted summing of the first and second urea injection amounts. Alternatively, another suitable function form could also be used to combine the first and second urea injection amounts.

Next, in box S500, a target injection amount of urea injected to the SCR reactor, i.e. a urea injection amount of the SCR urea injection system, is obtained on the basis of the combined urea injection amount and a urea injection amount limit value. Here, the urea injection amount limit value is a value corresponding to the phenomenon of urea crystallization; when an equivalent amount of urea injected into the SCR reactor is less than or equal to the urea injection amount limit value, the phenomenon of crystallization will not occur in the SCR reactor. In an example of the present application, the urea injection amount may be preset, or may be obtained on the basis of the catalyst temperature in the SCR reactor and the exhaust gas mass flow rate in the SCR reactor.

In addition, in an example of the present application, the step of obtaining a target injection amount of urea injected to the SCR reactor on the basis of the combined urea injection amount and a urea injection amount limit value may comprise: using the smaller value of the combined urea injection amount and the urea injection amount limit value as the target injection amount of urea injected to the SCR reactor. In other examples of the present application, other suitable function forms can also be used to obtain the target injection amount of urea injected to the SCR reactor on the basis of the combined urea injection amount and the urea injection amount limit value.

Fig. 2 shows a block diagram of one example of a device for controlling an injection amount of an SCR urea injection system in an engine according to an embodiment of the present application (abbreviated as control device 10 hereinbelow).

As shown in fig. 2, the control device 10 comprises an ammonia loading amount calculating unit 110, a first urea injection amount obtaining unit 120, a second urea injection amount obtaining unit 130, a combining unit 140 and a target injection amount obtaining unit 150.

The ammonia loading amount calculating unit 110 is configured to use an ammonia loading amount model to calculate a current ammonia loading amount in an SCR reactor on the basis of an aqueous urea solution amount injected to the SCR reactor and an ammonia amount consumed by the SCR reactor. The injected aqueous urea solution amount is an aqueous urea solution amount injected to the SCR reactor through a urea nozzle, and may be detected by means of a sensor disposed at the urea nozzle and transmitted to the control device. For example, the injected aqueous urea solution amount may be calculated using an electronically controlled urea nozzle energization time, an injection pressure, a nozzle characteristic, and a concentration of urea in a standard urea solution. After obtaining the aqueous urea solution amount as described above, a pyrolysis reaction caused by exhaust gas temperature is used to subject the injected aqueous urea solution to pyrolysis, thereby obtaining an injected ammonia amount. The ammonia amount is calculated on the basis of the injected aqueous urea solution amount and a parameter such as the chemical coefficient of urea and ammonia. The ammonia amount consumed by the SCR reactor is an ammonia amount consumed by the SCR reactor in a catalytic reduction reaction, and may be calculated using nitrogen-oxygen compound concentrations detected by NOx sensors disposed in front of and behind the SCR reactor and the chemical coefficient of nitrogen oxides and ammonia in the SCR reduction reaction, and transmitted to the control device. The sensor may be realized using a gas sensor of any type that is well known in the art, e.g. an NOx sensor manufactured by BOSCH. The units of the ammonia amount are generally equivalents, e.g. mg/s. The ammonia loading amount model may be a preset model; an input thereof generally comprises the injected ammonia amount and the consumed ammonia amount, and an output thereof is the current ammonia loading amount in the SCR reactor. In general, the ammonia loading amount model may be constructed through multiple experiments.

The first urea injection amount obtaining unit 120 is configured to obtain a first urea injection amount, on the basis of a target ammonia loading amount and the calculated current ammonia loading amount. Here, the target ammonia loading amount threshold value may be preset, and may be an experimental value or an empirical value. The target ammonia loading amount is determined by a catalyst temperature and an exhaust gas mass flow rate. In one example of the present application, the first urea injection amount obtaining unit 120 may comprise: a difference calculating module (not shown), for calculating the difference between the target ammonia loading amount and the current ammonia loading amount; and a first urea injection amount obtaining module (not shown), for obtaining the first urea injection amount on the basis of the calculated difference. The first urea injection amount is a urea injection amount corresponding to ammonia loading. In other examples of the present application, the first urea injection amount obtaining unit 120 can also be realized in other suitable ways.

The second urea injection amount obtaining unit 130 is configured to use an SCR efficiency model to calculate a second urea injection amount on the basis of a catalyst temperature, an exhaust gas mass flow rate and an aging coefficient in the SCR reactor, a nitrogen-oxygen compound concentration upstream of the SCR reactor, and a calculated required ammonia loading amount. Similarly, the catalyst temperature and exhaust gas mass flow rate in the SCR reactor and the nitrogen-oxygen compound concentration may be detected by means of a temperature sensor and flow rate sensor disposed in the SCR reactor, and a concentration sensor disposed upstream of the SCR reactor, and transmitted to the control device. The aging coefficient may be preset, or set in real time by means of environmental parameters.

Here, similar to the ammonia loading amount model, the SCR efficiency model may be a preset model; an input thereof generally comprises the catalyst temperature, the exhaust gas mass flow rate and the aging coefficient in the SCR reactor, the nitrogen-oxygen compound concentration upstream of the SCR reactor, and the calculated current ammonia loading amount, and an output thereof is a urea injection amount corresponding to SCR efficiency. Generally, the SCR efficiency model may be constructed through multiple experiments.

The combining unit 140 is configured to combine the first urea injection amount and the second urea injection amount to obtain a combined urea injection amount. In one example of the present application, the combining unit 140 is configured to: sum the first urea injection amount and the second urea injection amount. In other examples of the present invention, the combining unit 140 can also perform combination in other suitable ways, e.g. setting weighting factors for the first urea injection amount and the second urea injection amount respectively, and then performing weighted summing of the first and second urea injection amounts. Alternatively, the combining unit 140 could also use another suitable function form to combine the first and second urea injection amounts.

The target injection amount obtaining unit 150 is configured to obtain, on the basis of the combined urea injection amount and a urea injection amount limit value, a target injection amount of urea injected to the SCR rector, that is, a urea injection amount of the SCR urea injection system. Here, the urea injection amount limit value is a value corresponding to the phenomenon of urea crystallization; when an equivalent amount of urea injected into the SCR reactor is less than or equal to the urea injection amount limit value, the phenomenon of crystallization will not occur in the SCR reactor. In an example of the present application, the urea injection amount may be preset, or may be obtained on the basis of the catalyst temperature in the SCR reactor and the exhaust gas mass flow rate in the SCR reactor.

In addition, in an example of the present application, the target injection amount obtaining unit 150 is configured to: use the smaller value of the combined urea injection amount and the urea injection amount limit value as the target injection amount of urea injected to the SCR reactor. In other examples of the present application, other suitable function forms can also be used to obtain the target injection amount of urea injected to the SCR reactor on the basis of the combined urea injection amount and the urea injection amount limit value.

The method and device for controlling an injection amount of an SCR urea injection system in an engine according to one embodiment of the present application have been described above with reference to figs. 1 and 2; using the abovementioned method and device, by obtaining the first and second urea injection amounts on the basis of the ammonia loading model and the SCR efficiency model, and obtaining the target urea injection amount of the SCR reactor on the basis of the combined first and second urea injection amounts and the urea injection amount limit value corresponding to urea crystallization, the amount of urea injected into the SCR reactor can be precisely controlled, thereby preventing the occurence of urea crystallization in an engine exhaust pipeline and the SCR reactor.

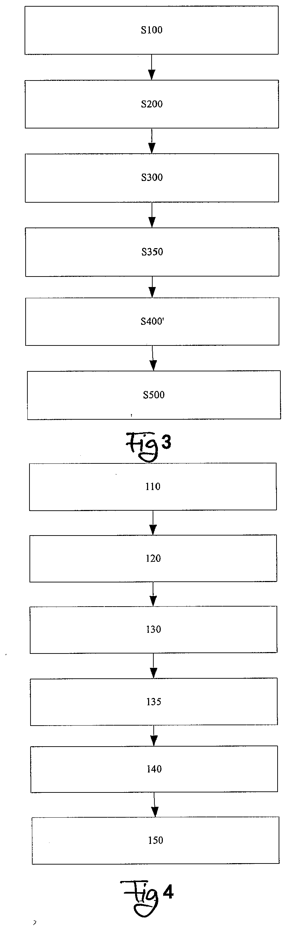

Fig. 3 shows a flow chart of another example of a method for controlling an injection amount of an SCR urea injection system in an engine according to an embodiment of the present application. The embodiment shown in fig. 3 is an improvement of the embodiment shown in fig. 1. Compared with the flow chart shown in fig. 1, in fig. 3, box S350 is further included prior to box S400, and box S400 is adaptively amended. To make the description concise, only the differences are described below.

In box S350, a third urea injection amount is obtained on the basis of a nitrogen-oxygen compound target concentration value and a nitrogen-oxygen compound concentration measurement value measured downstream of the SCR reactor. For example, when the nitrogen-oxygen compound concentration measurement value is greater than the nitrogen-oxygen compound target concentration value, a positive third injection amount is outputted, thereby increasing a total injection amount to further reduce an emission level of nitrogen oxides. When the nitrogen-oxygen compound concentration measurement value is not greater than the nitrogen-oxygen compound target concentration value, a negative third injection amount is outputted. Here, the nitrogen-oxygen compound target concentration value may be a preset empirical value, but could also be a specification value, e.g. an NOx emissions specification value defined in regulation GB18352.6-2016 for light-duty vehicle emissions. The nitrogen-oxygen compound concentration measurement value is detected by means of a concentration sensor disposed downstream of the SCR reactor, i.e. SCR reactor output gas that has undergone urea injection is subjected to nitrogen-oxygen compound concentration measurement.

Then, in box S400', the first urea injection amount, the second urea injection amount and the third urea injection amount are combined to obtain a combined urea injection amount.

Using the abovementioned improved solution, after measuring the nitrogen-oxygen compound concentration in SCR reactor output gas that has undergone urea injection, this concentration is compared with a specified nitrogen-oxygen compound target concentration value, and urea injection amount feedback is generated on the basis of a comparison result; this feedback is then returned to a control procedure to adjust the urea injection amount. The feedback may be positive feedback or negative feedback. In this way, control of the urea injection amount can be made more precise.

Fig. 4 shows a block diagram of another example of a device for controlling an injection amount of an SCR urea injection system in an engine according to an embodiment of the present application (called a control device 10' hereinbelow). Similarly, the control device 10' is an improvement upon the control device 10 in fig. 2. Compared with the control device 10 in fig. 2, the control device 10' further comprises a third urea injection amount obtaining unit 135.

The third urea injection amount obtaining unit 135 is configured to obtain a third urea injection amount on the basis of a nitrogen-oxygen compound target concentration value and a nitrogen-oxygen compound concentration measurement value measured downstream of the SCR reactor. Here, the nitrogen-oxygen compound target concentration value may be a preset empirical value, but could also be a specification value, e.g. an NOx emissions specification value defined in regulation GB18352.6-2016 for light-duty vehicle emissions. The nitrogen-oxygen compound concentration measurement value is detected by means of a concentration sensor disposed downstream of the SCR reactor, i.e. SCR reactor output gas that has undergone urea injection is subjected to nitrogen-oxygen compound concentration measurement.

Then, the combining unit 140 is configured to: combine the first urea injection amount, the second urea injection amount and the third urea injection amount, to obtain a combined urea injection amount.

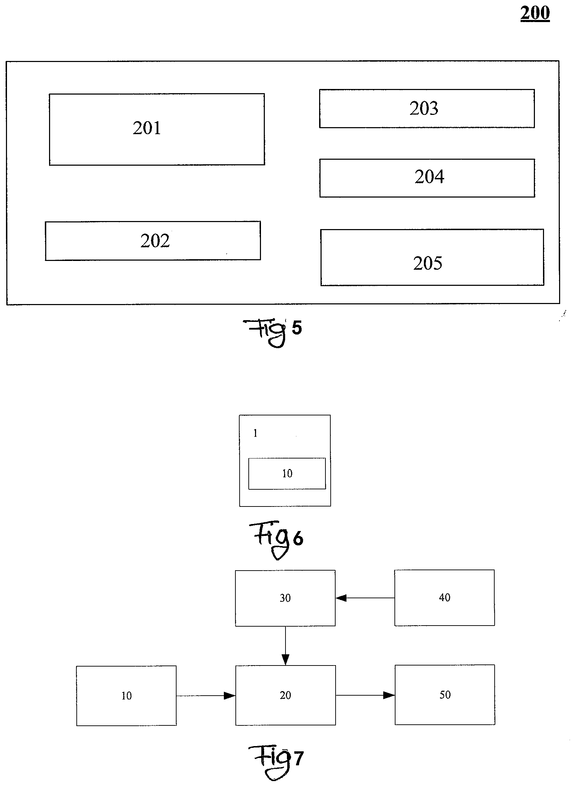

Fig. 5 shows a block diagram of a calculation system 200 for controlling an aqueous urea solution injection amount of an SCR urea injection system in an engine according to an embodiment of the present subject matter. According to one embodiment, the calculation system 200 may comprise one or more processors 201 for executing one or more calculation system readable instructions (i.e. the abovementioned element realized in software form) stored or encoded in a calculation system readable storage medium (i.e. a memory 202). The calculation system 20 may comprise an output apparatus 203 such as a display, and an input apparatus 204 such as a keyboard, a mouse or a touch screen. The calculation system 200 may comprise a communication interface 205, for communicating with another apparatus such as robots 210 and 220 shown in fig. 2.

In one example, a calculation system executable instruction is stored in the memory 202 and, when executed, causes one or more processors 201 to: use an ammonia loading amount model to calculate a current ammonia loading amount in an SCR reactor on the basis of an ammonia amount injected to the SCR reactor and an ammonia amount consumed by the SCR reactor; obtain a first urea injection amount on the basis of a target ammonia loading amount and the calculated current ammonia loading amount; use an SCR efficiency model to calculate a second urea injection amount on the basis of a catalyst temperature, an exhaust gas mass flow rate, a nitrogen-oxygen compound concentration and an aging coefficient in the SCR reactor, and the calculated current ammonia loading amount; combine the first urea injection amount and the second urea injection amount to obtain a combined urea injection amount; and obtain a target injection amount of urea injected to the SCR reactor on the basis of the combined urea injection amount and a urea injection amount limit value.

It should be understood that the calculation system executable instruction stored in the memory 202, when executed, causes one or more processors 201 to perform various operations and functions described above with reference to figs. 1 - 4 in various embodiments of the present application.

According to one embodiment, a program product such as a non-transitory machine-readable medium is provided. The non-transitory machine-readable medium may have an instruction (i.e. the abovementioned element realized in software form) which, when executed by a machine, causes the machine to execute various operations and functions described above with reference to figs. 1 - 4 in various embodiments of the present application.

In addition, the present application further provides a urea injection system having a device for controlling an injection amount of an SCR urea injection system in an engine according to an embodiment of the present application, as shown in fig. 6.

Fig. 7 shows an SCR system having a device for controlling an aqueous urea solution injection amount of an SCR urea injection system in an engine according to an embodiment of the present application. As shown in fig. 7, the SCR system comprises a control device 10, a urea nozzle 20, a urea pump 30, a urea storage apparatus 40 and an SCR reactor 50.

The urea storage apparatus 40 is used for storing aqueous urea solution. The urea pump 30 is connected by means of pipelines to the urea storage apparatus 40 and the urea nozzle 20, and is used for pumping aqueous urea solution from the urea storage apparatus 40, and conveying the pumped aqueous urea solution to the urea nozzle 20 for the urea nozzle 20 to inject same to the SCR reactor 50.

The control device 10 is connected to the urea nozzle 20, and is used for controlling an amount of aqueous urea solution injected by the urea nozzle to the SCR reactor. The injection amount control process of the control device 10 is as discussed above with reference to figs. 1 and 3. In addition, the SCR system further comprises a temperature sensor, a flow rate sensor and one or more nitrogen-oxygen compound sensors (the abovementioned components are not shown in fig. 7). The temperature sensor may be disposed in the SCR reactor, but could also be disposed upstream or downstream of the SCR reactor, and is used for sensing a catalyst temperature in the SCR reactor. The flow rate sensor is disposed in the SCR reactor, and is used for sensing an exhaust gas mass flow rate in the SCR reactor. The one or more nitrogen-oxygen compound sensors may comprise a nitrogen-oxygen compound sensor disposed upstream of the SCR reactor, which sensor is used for sensing a nitrogen-oxygen compound concentration upstream of the SCR reactor. In addition, preferably, the one or more nitrogen-oxygen compound sensors may further comprise a nitrogen-oxygen compound sensor disposed downstream of the SCR reactor, which sensor is used for sensing a nitrogen-oxygen compound concentration downstream of the SCR reactor, i.e. a nitrogen-oxygen compound concentration after reduction treatment in the SCR reactor; this concentration is used to provide feedback to the control device. Here, the control device 10, the urea nozzle 20, the urea pump 30 and the urea storage apparatus 40 may be included in the urea injection system as components of the urea injection system.

In addition, it must be explained that besides being disposed in the urea injection system, the control device could also be disposed in an electronic control unit (ECU) of a motor vehicle. The control device may be realized using software, hardware or a combination thereof.

The particular embodiments expounded above with reference to the accompanying drawings have described demonstrative embodiments, but do not represent all embodiments which are implementable or fall within the scope of protection of the claims. The term "demonstrative" used throughout this Description means "used as an example, a real example or an illustration", and does not mean "preferred" or "having an advantage" compared with other embodiments. In order to provide an understanding of the technology described, particular embodiments include particular details. However, these technologies may be implemented without these particular details. In some real examples, in order to avoid causing difficulties in understanding of concepts of described embodiments, well known structures and devices are shown in the form of block diagrams.

## Claims

1. A method for controlling an aqueous urea solution injection amount of an SCR urea injection system in an engine, comprising:
using an ammonia loading amount model to calculate a current ammonia loading amount in an SCR reactor on the basis of an aqueous urea solution amount injected to the SCR reactor and an ammonia amount consumed by the SCR reactor;
obtaining a first urea injection amount on the basis of a target ammonia loading amount and the calculated current ammonia loading amount;
using an SCR efficiency model to calculate a second urea injection amount on the basis of a catalyst temperature, an exhaust gas mass flow rate and an aging coefficient in the SCR reactor, a nitrogen-oxygen compound concentration upstream of the SCR reactor, and the calculated current ammonia loading amount;
combining the first urea injection amount and the second urea injection amount to obtain a combined urea injection amount; and
obtaining a target injection amount of aqueous urea solution injected to the SCR reactor on the basis of the combined urea injection amount and a urea injection amount limit value.

2. The method as claimed in claim 1, wherein the urea injection amount limit value is preset, or is obtained on the basis of the catalyst temperature in the SCR reactor and the exhaust gas mass flow rate in the SCR reactor.

3. The method as claimed in claim 1, wherein the step of obtaining a first urea injection amount on the basis of a target ammonia loading amount and the calculated current ammonia loading amount comprises:
calculating the difference between the target ammonia loading amount and the current ammonia loading amount; and
obtaining the first urea injection amount on the basis of the calculated difference.

4. The method as claimed in claim 1, wherein the step of combining the first urea injection amount and the second urea injection amount, to obtain a combined urea injection amount, comprises:
summing the first urea injection amount and the second urea injection amount.

5. The method as claimed in claim 4, wherein the step of summing the first urea injection amount and the second urea injection amount comprises:
performing weighted summing of the first urea injection amount and the second urea injection amount.

6. The method as claimed in claim 1, wherein the step of obtaining a target injection amount of urea injected to the SCR reactor on the basis of the combined urea injection amount and a urea injection amount limit value comprises:
using the smaller value of the combined urea injection amount and the urea injection amount limit value as the target injection amount of urea injected to the SCR reactor.

7. The method as claimed in claim 1, further comprising:
obtaining a third urea injection amount on the basis of a nitrogen-oxygen compound target concentration value and a nitrogen-oxygen compound concentration measurement value measured downstream of the SCR reactor, and
the step of combining the first urea injection amount and the second urea injection amount, to obtain a combined urea injection amount, comprising:
combining the first urea injection amount, the second urea injection amount and the third urea injection amount to obtain a combined urea injection amount.

8. A device for controlling an aqueous urea solution injection amount of an SCR urea injection system in an engine, comprising:
an ammonia loading amount calculating unit, configured to use an ammonia loading amount model to calculate a current ammonia loading amount in an SCR reactor on the basis of an aqueous urea solution amount injected to the SCR reactor and an ammonia amount consumed by the SCR reactor;
a first urea injection amount obtaining unit, configured to obtain a first urea injection amount on the basis of a target ammonia loading amount and the calculated current ammonia loading amount;
a second urea injection amount obtaining unit, configured to use an SCR efficiency model to calculate a second urea injection amount on the basis of a catalyst temperature, an exhaust gas mass flow rate and an aging coefficient in the SCR reactor, a nitrogen-oxygen compound concentration upstream of the SCR reactor, and the calculated current ammonia loading amount;
a combining unit, configured to combine the first urea injection amount and the second urea injection amount to obtain a combined urea injection amount; and
a target injection amount obtaining unit configured to obtain a target injection amount of aqueous urea solution injected to the SCR reactor on the basis of the combined urea injection amount and a urea injection amount limit value.

9. The device as claimed in claim 8, further comprising:
a urea injection amount limit value obtaining unit, configured to obtain the urea injection amount limit value on the basis of the catalyst temperature in the SCR reactor and the exhaust gas mass flow rate in the SCR reactor.

10. The device as claimed in claim 8, wherein the first urea injection amount obtaining unit comprises:
a difference calculating module, configured to calculate the difference between the target ammonia loading amount and the current ammonia loading amount; and
a first urea injection amount obtaining module, configured to obtain the first urea injection amount on the basis of the calculated difference.

11. The device as claimed in claim 8, wherein the combining unit is configured to: sum the first urea injection amount and the second urea injection amount.

12. The device as claimed in claim 8, wherein the target injection amount acquiring unit is configured to: use the smaller value of the combined urea injection amount and the urea injection amount limit value as an injection amount of aqueous urea solution injected to the SCR reactor.

13. The device as claimed in claim 8, further comprising:
a third urea injection amount obtaining unit, configured to obtain a third urea injection amount on the basis of a nitrogen-oxygen compound target concentration value and a nitrogen-oxygen compound concentration measurement value measured downstream of the SCR reactor, and
the combining unit being configured to:
combine the first urea injection amount, the second urea injection amount and the third urea injection amount to obtain a combined urea injection amount.

14. The device as claimed in claim 8, wherein the device is disposed in a urea injection system or in an electronic control unit.

15. A calculation system, comprising:
one or more processors; and
a memory, storing a calculation system executable instruction which, when executed, causes the one or more processors to execute the method as claimed in any one of claims 1 - 7.

16. Anon-transitory machine-readable storage medium, storing an executable instruction which, when executed, causes the machine to execute the method as claimed in any one of claims 1 - 7.

## Patentansprüche

1. Verfahren zur Steuerung der Einspritzmenge einer wässrigen Harnstofflösung von einem SCR-Harnstoffeinspritzsystem in einen Motor, bei dem man:
ein Modell der Ammoniaklast zur Berechnung einer augenblicklichen Ammoniaklast in einem SCR-Reaktor auf Grundlage einer in den SCR-Reaktor eingespritzten Menge einer wässrigen Harnstofflösung und einer durch den SCR-Reaktor verbrauchten Ammoniakmenge verwendet;
auf Grundlage einer Soll-Ammoniaklast und der berechneten augenblicklichen Ammoniaklast eine erste Harnstoffeinspritzmenge erhält;
ein Modell der SCR-Effizienz zur Berechnung einer zweiten Harnstoffeinspritzmenge auf Grundlage einer Katalysatortemperatur, eines Abgasmassenstroms und eines Alterungskoeffizienten in dem SCR-Reaktor, einer Konzentration einer Stickstoff-Sauerstoff-Verbindung prozessaufwärts des SCR-Reaktors und der berechneten augenblicklichen Ammoniaklast verwendet;
die erste Harnstoffeinspritzmenge und die zweite Harnstoffeinspritzmenge zum Erhalt einer kombinierten Harnstoffeinspritzmenge kombiniert; und
eine Soll-Einspritzmenge von in den SCR-Reaktor eingespritzter wässriger Harnstofflösung auf Grundlage der kombinierten Harnstoffeinspritzmenge und eines Grenzwerts der Harnstoffeinspritzmenge erhält.

2. Verfahren nach Anspruch 1, wobei der Grenzwert der Harnstoffeinspritzmenge vorgegeben wird oder auf Grundlage der Katalysatortemperatur in dem SCR-Reaktor und des Abgasmassenstroms in dem SCR-Reaktor erhalten wird.

3. Verfahren nach Anspruch 1, wobei man beim Schritt des Erhaltens einer ersten Harnstoffeinspritzmenge auf Grundlage einer Soll-Ammoniaklast und der berechneten augenblicklichen Ammoniaklast:
die Differenz zwischen der Soll-Ammoniaklast und der augenblicklichen Ammoniaklast berechnet; und
die erste Harnstoffeinspritzmenge auf Grundlage der berechneten Differenz erhält.

4. Verfahren nach Anspruch 1, wobei man beim Schritt des Kombinierens der ersten Harnstoffeinspritzmenge und der zweiten Harnstoffeinspritzmenge zum Erhalt einer kombinierten Harnstoffeinspritzmenge:
die erste Harnstoffeinspritzmenge und die zweite Harnstoffeinspritzmenge summiert.

5. Verfahren nach Anspruch 4, wobei man beim Schritt des Summierens der ersten Harnstoffeinspritzmenge und der zweiten Harnstoffeinspritzmenge:
eine gewichtete Summierung der ersten Harnstoffeinspritzmenge und der zweiten Harnstoffeinspritzmenge durchführt.

6. Verfahren nach Anspruch 1, wobei man beim Schritt des Erhaltens einer Soll-Einspritzmenge von in den SCR-Reaktor eingespritzten Harnstoff auf Grundlage der kombinierten Harnstoffeinspritzmenge und eines Grenzwerts der Harnstoffeinspritzmenge:
den kleineren Wert der kombinierten Harnstoffeinspritzmenge bzw. des Grenzwerts der Harnstoffeinspritzmenge als die Soll-Einspritzmenge von in den SCR-Reaktor eingespritzten Harnstoff verwendet.

7. Verfahren nach Anspruch 1, bei dem man ferner:
eine dritte Harnstoffeinspritzmenge auf Grundlage eines Sollwerts der Konzentration einer Stickstoff-Sauerstoff-Verbindung und eines prozessabwärts des SCR-Reaktors gemessenen Messwerts der Konzentration einer Stickstoff-Sauerstoff-Verbindung erhält, und
beim Schritt des Kombinierens der ersten Harnstoffeinspritzmenge und der zweiten Harnstoffeinspritzmenge zum Erhalt einer kombinierten Harnstoffeinspritzmenge:
die erste Harnstoffeinspritzmenge und die zweite Harnstoffeinspritzmenge und die dritte Harnstoffeinspritzmenge zum Erhalt einer kombinierten Harnstoffeinspritzmenge kombiniert.

8. Vorrichtung zur Steuerung der Einspritzmenge einer wässrigen Harnstofflösung von einem SCR-Harnstoffeinspritzsystem in einen Motor, die Folgendes umfasst:
eine Einheit zur Berechnung der Ammoniaklast, die zur Verwendung eines Modells der Ammoniaklast zur Berechnung einer augenblicklichen Ammoniaklast in einem SCR-Reaktor auf Grundlage einer in den SCR-Reaktor eingespritzten Menge einer wässrigen Harnstofflösung und einer durch den SCR-Reaktor verbrauchten Ammoniakmenge ausgelegt ist;
eine Einheit zum Erhalt einer ersten Harnstoffeinspritzmenge, die zum Erhalt einer ersten Harnstoffeinspritzmenge auf Grundlage einer Soll-Ammoniaklast und der berechneten augenblicklichen Ammoniaklast ausgelegt ist;
eine Einheit zum Erhalt einer zweiten Harnstoffeinspritzmenge, die zur Verwendung eines Modells der SCR-Effizienz zur Berechnung einer zweiten Harnstoffeinspritzmenge auf Grundlage einer Katalysatortemperatur, eines Abgasmassenstroms und eines Alterungskoeffizienten in dem SCR-Reaktor, einer Konzentration einer Stickstoff-Sauerstoff-Verbindung prozessaufwärts des SCR-Reaktors und der berechneten augenblicklichen Ammoniaklast ausgelegt ist;
eine Kombiniereinheit, die zum Kombinieren der ersten Harnstoffeinspritzmenge und der zweiten Harnstoffeinspritzmenge zum Erhalt einer kombinierten Harnstoffeinspritzmenge ausgelegt ist; und
eine Einheit zum Erhalt einer Soll-Einspritzmenge, die zum Erhalt einer Soll-Einspritzmenge von in den SCR-Reaktor eingespritzter wässriger Harnstofflösung auf Grundlage der kombinierten Harnstoffeinspritzmenge und eines Grenzwerts der Harnstoffeinspritzmenge ausgelegt ist.

9. Vorrichtung nach Anspruch 8, die ferner Folgendes umfasst:
eine Einheit zum Erhalt eines Grenzwerts der Harnstoffeinspritzmenge, die zum Erhalt des Grenzwerts der Harnstoffeinspritzmenge auf Grundlage der Katalysatortemperatur in dem SCR-Reaktor und des Abgasmassenstroms in dem SCR-Reaktor ausgelegt ist.

10. Vorrichtung nach Anspruch 8, wobei die Einheit zum Erhalt einer ersten Harnstoffeinspritzmenge Folgendes umfasst:
ein Modul zum Berechnen einer Differenz, das zur Berechnung einer Differenz zwischen der Soll-Ammoniaklast und der augenblicklichen Ammoniaklast ausgelegt ist; und
ein Modul zum Erhalt einer ersten Harnstoffeinspritzmenge, das zum Erhalt der ersten Harnstoffeinspritzmenge auf Grundlage der berechneten Differenz ausgelegt ist.

11. Verfahren nach Anspruch 8, wobei die Kombiniereinheit dazu ausgelegt ist, die erste Harnstoffeinspritzmenge und die zweite Harnstoffeinspritzmenge zu summieren.

12. Vorrichtung nach Anspruch 8, wobei die Einheit zum Erlangen der Soll-Einspritzmenge dazu ausgelegt ist, den kleineren Wert der kombinierten Harnstoffeinspritzmenge bzw. des Grenzwerts der Harnstoffeinspritzmenge als eine Einspritzmenge von in den SCR-Reaktor eingespritzter wässriger Harnstofflösung zu verwenden.

13. Vorrichtung nach Anspruch 8, die ferner Folgendes umfasst:
eine Einheit zum Erhalt einer dritten Harnstoffeinspritzmenge, die zum Erhalt einer dritten Harnstoffeinspritzmenge auf Grundlage eines Sollwerts der Konzentration einer Stickstoff-Sauerstoff-Verbindung und eines prozessabwärts des SCR-Reaktors gemessenen Messwerts der Konzentration einer Stickstoff-Sauerstoff-Verbindung ausgelegt ist, und
die Kombiniereinheit dazu ausgelegt ist:
die erste Harnstoffeinspritzmenge, die zweite Harnstoffeinspritzmenge und die dritte Harnstoffeinspritzmenge zum Erhalt einer kombinierten Harnstoffeinspritzmenge zu kombinieren.

14. Vorrichtung nach Anspruch 8, wobei die Vorrichtung in einem Harnstoffeinspritzsystem oder in einer elektronischen Steuereinheit angeordnet ist.

15. Berechnungssystem, das Folgendes umfasst:
einen oder mehrere Prozessoren; und
einen Speicher, auf dem eine vom Berechnungssystem ausführbare Anweisung gespeichert ist, die bei Ausführung den einen oder die mehreren Prozessoren dazu veranlasst, ein Verfahren nach einem der Ansprüche 1-7 auszuführen.

16. Nichtflüchtiges maschinenlesbares Speicherungsmedium, auf dem eine ausführbare Anweisung gespeichert ist, die bei Ausführung die Maschine dazu veranlasst, das Verfahren nach einem der Ansprüche 1-7 auszuführen.

## Revendications

1. Procédé de commande d'une quantité d'injection de solution d'urée aqueuse d'un système d'injection d'urée de SCR dans un moteur, comprenant :
l'utilisation d'un modèle de quantité de charge d'ammoniac pour calculer une quantité de charge d'ammoniac actuelle dans un réacteur SCR sur la base d'une quantité de solution d'urée aqueuse injectée dans le réacteur SCR et d'une quantité d'ammoniac consommée par le réacteur SCR ;
l'obtention d'une première quantité d'injection d'urée sur la base d'une quantité de charge d'ammoniac cible et de la quantité de charge d'ammoniac actuelle calculée ;
l'utilisation d'un modèle d'efficacité de SCR pour calculer une deuxième quantité d'injection d'urée sur la base d'une température de catalyseur, d'un débit massique de gaz d'échappement et d'un coefficient de vieillissement dans le réacteur SCR, d'une concentration de composé azote-oxygène en amont du réacteur SCR, et de la quantité de charge d'ammoniac actuelle calculée ;
la combinaison de la première quantité d'injection d'urée et la deuxième quantité d'injection d'urée pour obtenir une quantité d'injection d'urée combinée ; et
l'obtention d'une quantité d'injection cible de solution d'urée aqueuse injectée dans le réacteur SCR sur la base de la quantité d'injection d'urée combinée et d'une valeur limite de quantité d'injection d'urée.

2. Procédé selon la revendication 1, la valeur limite de quantité d'injection d'urée étant prédéfinie, ou étant obtenue sur la base de la température de catalyseur dans le réacteur SCR et du débit massique de gaz d'échappement dans le réacteur SCR.

3. Procédé selon la revendication 1, l'étape d'obtention d'une première quantité d'injection d'urée sur la base d'une quantité de charge d'ammoniac cible et de la quantité de charge d'ammoniac actuelle calculée comprenant :
le calcul de la différence entre la quantité de charge d'ammoniac cible et la quantité de charge d'ammoniac actuelle ; et
l'obtention de la première quantité d'injection d'urée sur la base de la différence calculée.

4. Procédé selon la revendication 1, l'étape de combinaison de la première quantité d'injection d'urée et de la deuxième quantité d'injection d'urée, pour obtenir une quantité d'injection d'urée combinée, comprenant :
l'addition de la première quantité d'injection d'urée et de la deuxième quantité d'injection d'urée.

5. Procédé selon la revendication 4, l'étape d'addition de la première quantité d'injection d'urée et de la deuxième quantité d'injection d'urée comprenant :
la réalisation d'une addition pondérée de la première quantité d'injection d'urée et de la deuxième quantité d'injection d'urée.

6. Procédé selon la revendication 1, l'étape d'obtention d'une quantité d'injection cible d'urée injectée dans le réacteur SCR sur la base de la quantité d'injection d'urée combinée et d'une valeur limite de quantité d'injection d'urée comprenant :
l'utilisation de la plus petite valeur de la quantité d'injection d'urée combinée et de la valeur limite de quantité d'injection d'urée en tant que quantité d'injection cible d'urée injectée dans le réacteur SCR.

7. Procédé selon la revendication 1, comprenant en outre :
l'obtention d'une troisième quantité d'injection d'urée sur la base d'une valeur de concentration cible de composé azote-oxygène et d'une valeur de mesure de concentration de composé azote-oxygène mesurée en aval du réacteur SCR, et
l'étape de combinaison de la première quantité d'injection d'urée et de la deuxième quantité d'injection d'urée, pour obtenir une quantité d'injection d'urée combinée, comprenant :
la combinaison de la première quantité d'injection d'urée, de la deuxième quantité d'injection d'urée et de la troisième quantité d'injection d'urée pour obtenir une quantité d'injection d'urée combinée.

8. Dispositif de commande d'une quantité d'injection de solution d'urée aqueuse d'un système d'injection d'urée de SCR dans un moteur, comprenant :
une unité de calcul de la quantité de charge d'ammoniac, configurée pour utiliser un modèle de quantité de charge d'ammoniac pour calculer une quantité de charge d'ammoniac actuelle dans un réacteur SCR sur la base d'une quantité de solution d'urée aqueuse injectée dans le réacteur SCR et d'une quantité d'ammoniac consommée par le réacteur SCR ;
une première unité d'obtention de quantité d'injection d'urée, configurée pour obtenir une première quantité d'injection d'urée sur la base d'une quantité de charge d'ammoniac cible et de la quantité de charge d'ammoniac actuelle calculée ;
une deuxième unité d'obtention de quantité d'injection d'urée, configurée pour utiliser un modèle d'efficacité de SCR pour calculer une deuxième quantité d'injection d'urée sur la base d'une température de catalyseur, d'un débit massique de gaz d'échappement et d'un coefficient de vieillissement dans le réacteur SCR, d'une concentration de composé azote-oxygène en amont du réacteur SCR, et de la quantité de charge d'ammoniac actuelle calculée ;
une unité de combinaison, configurée pour combiner la première quantité d'injection d'urée et la deuxième quantité d'injection d'urée pour obtenir une quantité d'injection d'urée combinée ; et
une unité d'obtention de quantité d'injection cible configurée pour obtenir une quantité d'injection cible de solution d'urée aqueuse injectée dans le réacteur SCR sur la base de la quantité d'injection d'urée combinée et d'une valeur limite de quantité d'injection d'urée.

9. Dispositif selon la revendication 8, comprenant en outre :
une unité d'obtention de valeur limite de quantité d'injection d'urée, configurée pour obtenir la valeur limite de quantité d'injection d'urée sur la base de la température de catalyseur dans le réacteur SCR et du débit massique de gaz d'échappement dans le réacteur SCR.

10. Dispositif selon la revendication 8, la première unité d'obtention de quantité d'injection d'urée comprenant :
un module de calcul de différence, configuré pour calculer la différence entre la quantité de charge d'ammoniac cible et la quantité de charge d'ammoniac actuelle ; et
un module d'obtention de première quantité d'injection d'urée, configuré pour obtenir la première quantité d'injection d'urée sur la base de la différence calculée.

11. Dispositif selon la revendication 8, l'unité de combinaison étant configurée pour : additionner la première quantité d'injection d'urée et la deuxième quantité d'injection d'urée.

12. Dispositif selon la revendication 8, l'unité d'acquisition de quantité d'injection cible étant configurée pour : utiliser la plus petite valeur de la quantité d'injection d'urée combinée et de la valeur limite de quantité d'injection d'urée en tant que quantité d'injection de solution d'urée aqueuse injectée dans le réacteur SCR.

13. Dispositif selon la revendication 8, comprenant en outre :
une troisième unité d'obtention de quantité d'injection d'urée, configurée pour obtenir une troisième quantité d'injection d'urée sur la base d'une valeur de concentration cible de composé azote-oxygène et d'une valeur de mesure de concentration de composé azote-oxygène mesurée en aval du réacteur SCR, et
l'unité de combinaison étant configurée pour :
combiner la première quantité d'injection d'urée, la deuxième quantité d'injection d'urée et la troisième quantité d'injection d'urée pour obtenir une quantité d'injection d'urée combinée.

14. Dispositif selon la revendication 8, le dispositif étant disposé dans un système d'injection d'urée ou dans une unité de commande électronique.

15. Système de calcul, comprenant :
un ou plusieurs processeurs ; et
une mémoire, stockant une instruction exécutable du système de calcul qui, lorsqu'elle est exécutée, amène le ou les processeurs à exécuter le procédé selon l'une quelconque des revendications 1 à 7.

16. Support de stockage non transitoire lisible par une machine, stockant une instruction exécutable qui, lorsqu'elle est exécutée, amène la machine à exécuter le procédé selon l'une quelconque des revendications 1 à 7.
